# FASCICULE DE BREVET EUROPEEN

(11) **EP 1 873 456 B1**
(45) Date de publication et mention de la délivrance du brevet: **06.01.2016**
(21) Numéro de dépôt: 07075477.5
(22) Date de dépôt: 15.06.2007
(51) Int. Cl.: F23R 3/14

(54) **Dispositif d'injection d'un mélange d'air et de carburant, chambre de combustion et turbomachine munies d'un tel dispositif**
Vorrichtung zum Einspritzen einer Mischung aus Luft und Treibstoff, Brennkammer und Strömungsmaschine, die mit einer solchen Vorrichtung ausgestattet ist
Device for injecting a mix of air and fuel, combustion chamber and turbomachine equipped with such a device

(30) Priorité: 29.06.2006 FR 0605852
(43) Date de publication de la demande: 02.01.2008
(73) Titulaire: SNECMA, 75015 Paris (FR)
(72) Inventeur: Cayre, Alain, 77830 Pamfou (FR); Desaulty, Michel, 77240 Vert St Denis (FR); Sandelis, Denis, 77370 Nangis (FR)
(74) Mandataire: Ilgart, Jean-Christophe

(56) Documents cités:
- EP-A- 1 314 933
- EP-A- 1 508 743
- EP-A2- 1 158 246
- EP-A2- 1 278 012

## Description

L'invention se rapporte au domaine des turbomachines et concerne un dispositif d'injection d'un mélange d'air et de carburant dans une chambre de combustion d'une turbomachine .

Elle concerne plus précisément un dispositif d'injection muni d'une nouvelle traversée coulissante et d'une nouvelle coupelle annulaire de maintien de la traversée coulissante permettant d'améliorer l'alimentation en air du dispositif d'injection.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine ou l'axe de symétrie de la structure considérée.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et fournir le travail nécessaire, par exemple, à la motorisation d'un avion.

Typiquement, une chambre de combustion utilisée en aéronautique comprend une paroi interne et une paroi externe, reliées entre elles à leur extrémité amont par un fond de chambre. Le fond de chambre présente, espacées circonférentiellement, une pluralité d'ouvertures recevant chacune un dispositif d'injection au milieu duquel vient se positionner un injecteur, l'ensemble permettant l'amenée du mélange d'air et de carburant dans la chambre.

La chambre de combustion est alimentée par du carburant liquide, mélangé à de l'air issu d'un compresseur. Le carburant liquide est amené jusqu'à la chambre par les injecteurs dans lesquels il est vaporisé en fines gouttelettes. Cette vaporisation est initiée au niveau de l'injecteur grâce à des gicleurs et est poursuivie au niveau du venturi et du bol par l'effet d'air sous pression provenant d'un compresseur. Cet air sous pression traverse, d'une part, les vrilles radiales du dispositif d'injection pour mettre en rotation le carburant pulvérisé par l'injecteur, et, d'autre part, des orifices ménagés dans différentes parties du dispositif d'injection telles que le bol.

Comme illustré notamment dans le document FR 2 753 779, un dispositif d'injection possède une symétrie de révolution et comporte, disposés de l'amont vers l'aval, une traversée coulissante, liée par une coupelle annulaire à des vrilles radiales. Les vrilles radiales comportent un venturi et sont reliées par leur extrémité aval à un bol à paroi conique divergente. Le bol est lui-même relié au fond de chambre par l'intermédiaire d'un déflecteur. Selon l'art antérieur, la traversée coulissante comporte, disposés de l'amont vers l'aval, une paroi amont de forme conique convergente, se prolongeant en une paroi cylindrique qui se termine en aval par un flasque annulaire s'étendant radialement vers l'extérieur.
Les demandes de brevet EP 1314933A et EP 1158246 montrent des dispositifs d'injection d'air et de carburant dans une chambre de combustion mais ne permettent pas de résoudre le problème de l'invention.

Du fait de la forme conique convergente de sa partie amont, la traversée coulissante constitue un obstacle que doit contourner l'air provenant du compresseur. De même, le diamètre extérieur de la coupelle annulaire, qui sert de guide radial pour la traversée coulissante, étant important, la coupelle annulaire constitue elle aussi un obstacle à contourner. Ceci est à l'origine de recirculations d'air et de pertes de charge importantes, néfastes pour l'alimentation en air du dispositif d'injection. La qualité de pulvérisation est alors dégradée, ce qui se traduit par une taille de gouttelettes plus grande, et un dépôt de coke peut apparaître sur le venturi et le bol. La carburation, et donc les performances, sont ainsi dégradées.

L'objet de l'invention est de réaliser un dispositif d'injection permettant d'optimiser l'alimentation en air en minimisant les pertes de charge entre la sortie du compresseur et l'intérieur de la chambre de combustion. Cet objectif est atteint en aménageant le profil et la forme de la traversée coulissante et de la coupelle annulaire.

L'invention permet de résoudre ce problème en proposant un dispositif d'injection comportant une traversée coulissante et une coupelle annulaire dont les géométries sont telles que l'air issu du compresseur ne rencontre plus d'obstacle sur la partie amont du dispositif d'injection.

Plus particulièrement, l'invention concerne un dispositif d'injection selon la revendication 1.

La partie amont cylindrique de la traversée coulissante peut comporter une face amont en biseau, la face amont étant inclinée radialement vers l'intérieur.

De façon préférentielle, la face amont de la traversée coulissante est inclinée selon un angle d'environ 45° par rapport à l'axe de symétrie du dispositif d'injection.

La partie amont cylindrique de la traversée coulissante peut de plus être munie d'une vrille axiale.

Avantageusement, le flasque annulaire de la traversée coulissante a une extrémité radialement interne munie d'au moins une rangée d'orifices. Les orifices de la rangée peuvent être répartis de façon régulière sur toute la circonférence du flasque annulaire et leur axe peut être globalement parallèle à la partie intermédiaire conique convergente de la traversée coulissante.

Selon un mode préféré de réalisation, le bol et la coupelle annulaire ayant chacun un rayon extérieur, le rayon extérieur du bol est compris entre 1,1 et 1,2 fois la valeur du rayon extérieur de la coupelle annulaire. Dans ce cas, de façon avantageuse, le bol comporte une paroi conique divergente qui forme avec l'axe du symétrie du dispositif d'injection un angle compris entre 70 et 130 degrés.

Par ailleurs, l'invention concerne aussi une chambre de combustion comprenant une paroi interne, une paroi externe, un fond de chambre et munie d'au moins un tel dispositif d'injection.

L'invention concerne enfin une turbomachine munie d'une telle chambre de combustion.

L'invention sera mieux comprise et d'autres avantages de celle-ci apparaîtront plus clairement à la lumière de la description d'un mode préféré de réalisation, donnée à titre d'exemple non limitatif et faite en référence aux dessins annexés, dans lesquels :
- la figure 1 est une vue schématique en coupe d'une turbomachine et plus précisément d'un turboréacteur d'avion ;
- la figure 2a est une vue schématique en coupe de la partie amont inférieure d'une chambre de combustion munie d'un dispositif d'injection selon l'art antérieur ;
- la figure 2b est une vue schématique en coupe de la partie amont supérieure d'une chambre de combustion munie d'un dispositif d'injection selon l'invention ;
- la figure 3 est une vue schématique en coupe de la partie amont supérieure d'une chambre de combustion munie d'une variante de réalisation d'un dispositif d'injection selon l'invention.

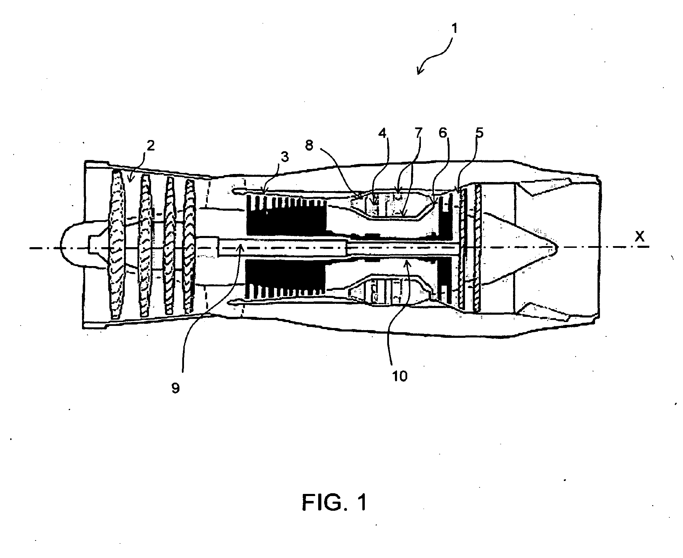

La figure 1 montre en coupe une vue d'ensemble d'une turbomachine 1, par exemple un turboréacteur d'avion, comprenant un compresseur basse pression 2, un compresseur haute pression 3, une chambre de combustion 4, une turbine basse pression 5 et une turbine haute pression 6. La chambre de combustion 4 peut être du type annulaire et est délimitée par deux parois annulaires 7 espacées radialement par rapport à l'axe X de rotation du turboréacteur, et reliées à leur extrémité amont à un fond de chambre annulaire 8. Le fond de chambre 8 comporte une pluralité d'ouvertures (non représentées), régulièrement espacées circonférentiellement. Dans chacune de ces ouvertures est monté un dispositif d'injection. Les gaz de combustion s'écoulent vers l'aval dans la chambre de combustion 4 et alimentent ensuite les turbines 5 et 6 qui entraînent respectivement les compresseurs 2 et 3 disposés en amont du fond de chambre 8, par l'intermédiaire respectivement de deux arbres 9 et 10. Le compresseur haute pression 3 alimente en air les dispositifs d'injection, ainsi que deux espaces annulaires disposés radialement respectivement à l'intérieur et à l'extérieur de la chambre de combustion 4. L'air introduit dans la chambre de combustion 4 participe à la vaporisation du carburant et à sa combustion. L'air circulant à l'extérieur des parois de la chambre de combustion 2 participe au refroidissement de ces parois et pénètre dans la chambre par des trous de dilution (non représentés) afin de refroidir les gaz de combustion transmis à la turbine.

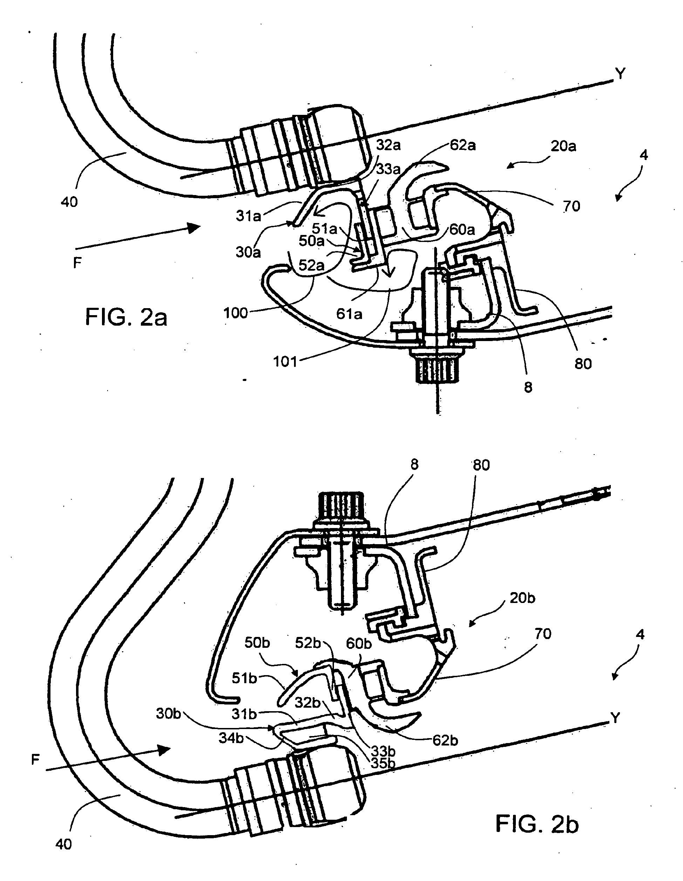

La figure 2a montre une vue schématique en coupe de la partie amont inférieure d'une chambre de combustion 4 munie d'un dispositif d'injection 20a selon l'art antérieur dont l'axe de symétrie de révolution est repéré Y.

Selon l'art antérieur, le dispositif d'injection 20a comporte une traversée coulissante 30a, au centre de laquelle se positionne un injecteur 40. La traversée coulissante 30a est composée d'une partie amont conique convergente 31a se prolongeant en une partie cylindrique 32a d'axe Y, cette partie cylindrique étant munie à son extrémité aval d'un flasque annulaire 33a s'étendant radialement vers l'extérieur. La partie conique convergente 31 a est inclinée à 45° environ par rapport à l'axe Y et à pour fonction de guider l'injecteur 40 lors de son montage sur le dispositif d'injection. Au niveau du flasque annulaire 33a, la traversée coulissante 30a est maintenue axialement par une coupelle annulaire 50a. La coupelle annulaire 50a comporte un flasque annulaire 51 a s'étendant radialement vers l'extérieur. Son extrémité radiale extérieure se termine par un bec annulaire cylindrique 52a d'axe Y dirigé vers l'amont. La coupelle annulaire 50a est reliée à des vrilles radiales 60a, ici au nombre de deux, par l'intermédiaire de son bec annulaire 52a lié, par exemple par brasage, à un bec 61 a de forme correspondante disposé à l'extrémité amont extérieure des vrilles 60a. Un espace est ménagé axialement entre le flasque annulaire 51 a et les vrilles radiales 60a de façon à autoriser le débattement radial de la traversée coulissante 30a. Ce débattement permet de compenser les déplacements relatifs entre l'injecteur 40 et le dispositif d'injection 20a. Les vrilles 60a sont munies d'un venturi 62a et sont reliée par leur extrémité aval intérieure à un bol 70. Le bol 70 est fixé par l'intermédiaire d'un déflecteur 80 au fond de chambre 8.

La forme de la partie amont 31a de la traversée coulissante constitue un obstacle au flux d'air F issu du compresseur et crée une recirculation d'air 100 provoquant des pertes de charge. De même, à cause de sa forme et notamment à cause de la présence du bec annulaire 52a, la coupelle annulaire constitue elle aussi un obstacle provoquant une recirculation d'air 101 et des pertes de charge. Ceci est à l'origine d'une mauvaise alimentation en air du dispositif d'injection 20a et entraîne notamment des dépôts de coke sur le venturi 62a et sur le bol 70.

Comme illustré à la figure 2b, selon l'invention, le dispositif d'injection 20b comporte toujours une traversée coulissante 30b maintenue axialement par une coupelle annulaire 50b mais leurs formes sont adaptées de façon à améliorer l'alimentation en air du dispositif d'injection 20b.

A cet effet, la traversée coulissante 30b est composée, disposées de l'amont vers l'aval, d'une partie amont cylindrique 31 b, se prolongeant en une partie intermédiaire conique convergente 32b et se terminant en un flasque annulaire 33b s'étendant radialement vers l'extérieur. La partie amont cylindrique 31 b présente une face amont 34b en biseau, cette face amont étant inclinée radialement vers l'intérieur, selon un angle d'environ 45°. Cette inclinaison permet à la traversée coulissante selon l'invention d'assurer sa fonction de guide lors du montage de l'injecteur 40. La partie amont cylindrique 31 b peut-être munie d'une vrille axiale 35b permettant d'améliorer l'alimentation en air du dispositif d'injection en introduisant de l'air issu du compresseur au niveau de l'extrémité aval de l'injecteur 40. La partie intermédiaire conique 32b a une dimension axiale et une inclinaison adaptées de façon à relier la partie amont 31 b et le flasque annulaire 33b tout en guidant l'air en sortie de la vrille axiale 35b.

La traversée coulissante 30b est maintenue axialement au niveau de son flasque annulaire 33b par la coupelle annulaire 50b. La coupelle annulaire 50b comporte un carénage amont profilé 51 b. Ce carénage amont 51 b a une forme globalement conique divergente, sa paroi étant légèrement convexe. Le carénage amont 51 b se prolonge par un flasque annulaire 52b s'étendant radialement vers l'intérieur. La coupelle annulaire 50b est reliée, au niveau du raccordement entre le carénage amont 51 b et le flasque annulaire 52b, à une ou plusieurs vrilles radiales 60b. Dans l'exemple illustré ici, le dispositif d'injection 20b est muni d'une seule vrille radiale 60b, munie d'un venturi 62b. Un espace est ménagé axialement entre le flasque annulaire 52b et la vrille radiale 60b de façon à autoriser le débattement radial de la traversée coulissante 30b. La vrille radiale 60b est reliée par son extrémité aval intérieure à un bol 70, lui-même rattaché au fond de chambre 8 par l'intermédiaire d'un déflecteur 80.

Grâce au remplacement, sur la traversée coulissante 30b, de la partie amont convergente par une partie amont cylindrique 31 b, et grâce à la forme divergente et convexe du carénage amont 51 b de la coupelle annulaire 50b, les obstacles au flux d'air F sont supprimés et l'air issu du compresseur est guidé vers la vrille radiale 60b et le bol 70 sans aucun accident de forme et donc peu de pertes de charges. De plus, lorsque la traversée coulissante 30b est munie d'une vrille axiale 35b, la vrille axiale 35b a le même effet sur la carburation que la vrille radiale disposée en amont du venturi 62b du dispositif d'injection selon l'art antérieur. Elle permet par ailleurs de créer un film d'air le long de la paroi intérieure du venturi 62b qui empêche la formation de coke sur le venturi. L'ensemble des améliorations apportées au dispositif d'injection 20b permet d'améliorer son alimentation en air et en plus d'éviter la formation de coke.

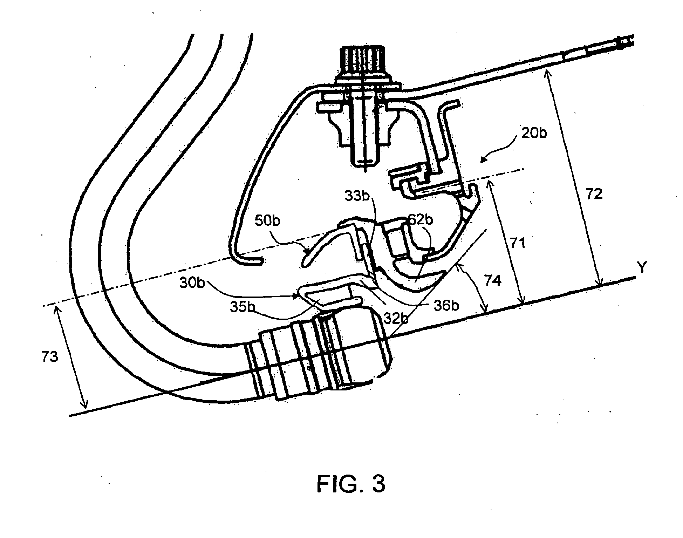

Le film anti-coke issu de la vrille axiale 35b peut-être remplacé ou son effet peut être accru en ménageant, comme illustré à la figure 3, une rangée d'orifices 36b sur l'extrémité radialement interne du flasque annulaire 33b de la traversée coulissante 30b. Ces orifices 36b sont répartis de façon régulière ou non sur toute la circonférence du flasque annulaire 33b. Leur axe est de préférence parallèle à la partie intermédiaire conique convergente 32b, tous deux étant disposés de façon à ce que l'air issu de la vrille axiale 35b et des orifices 36b longe la surface intérieure du venturi 62b.

De façon préférentielle mais pas uniquement, l'invention s'applique à des dispositifs d'injection pour lesquels le rayon extérieur 71 du bol 70 est suffisamment grand pour permettre son implantation optimale. Plus précisément, l'invention est particulièrement adaptée à des dispositifs d'injection ayant un rayon extérieur 71 de bol 70 compris entre 0,5 et 0,7 fois le rayon interne 72 de la chambre pris directement en aval du dispositif d'injection.

Par ailleurs, afin que l'alimentation en air du dispositif d'injection soit optimale, le rayon extérieur 71 du bol doit être compris entre 1,1 et 1,2 fois le rayon extérieur 73 de la coupelle annulaire 50b. Quand ce critère est respecté, si l'on souhaite limiter l'encombrement axial du dispositif d'injection, l'angle 74, entre le divergent du bol 70 et l'axe de symétrie Y du dispositif d'injection 20b, doit être compris entre 70° et 130°.

## Revendications

1. Dispositif d'injection d'un mélange d'air et de carburant dans une chambre de combustion d'une turbomachine, le dispositif d'injection ayant une symétrie de révolution autour d'un axe (Y) et comportant, disposés d'amont en aval dans le sens d'écoulement des gaz, une traversée coulissante (30b) au centre de laquelle est positionné un injecteur (40), une coupelle annulaire (50b) maintenant axialement la traversée coulissante (30b), au moins une vrille radiale (60b) comportant un venturi (62b), et reliée par son extrémité aval à un bol (70) :
**caractérisé en ce que** la traversée coulissante (30b) comporte, disposés de l'amont vers l'aval, une partie amont cylindrique (31b), se prolongeant en une partie intermédiaire conique convergente (32b) et se terminant en un flasque annulaire (33b) s'étendant radialement vers l'extérieur, et **en ce que** la coupelle annulaire (50b) comporte, disposés de l'amont vers l'aval, un carénage amont profilé (51b) ayant une forme conique divergente et une paroi externe convexe et se prolongent en un flasque annulaire (52b) s'étendant radialement vers l'intérieur.

2. Dispositif d'injection selon la revendication 1 **caractérisé en ce que** la partie amont cylindrique (31b) de la traversée coulissante (30b) comporte une face amont (34b) en biseau, la face amont étant inclinée radialement vers l'intérieur.

3. Dispositif d'injection selon la revendication 2, **caractérisé en ce que** la face amont (34b) de la traversée coulissante est indignée selon un angle d'environ 45° par rapport à l'axe de symétrie (Y) du dispositif d'injection.

4. Dispositif d'injection selon l'une quelconque des revendications précédentes, **caractérisé en ce que** la partie amont cylindrique (31b) de la traversée coulissante (30b) est munie d'une vrille axiale (35b).

5. Dispositif d'injection selon l'une quelconque des revendications précédentes, **caractérisé en ce que** le flasque annulaire (33b) de la traversée coulissante (30b) a une extrémité radialement interne munie d'au moins une rangée d'orifices (36b).

6. Dispositif d'injection selon la revendication 5 **caractérisé en ce que** les orifices de la rangée (36b) sont répartis de façon régulière sur toute la circonférence du flasque annulaire (33b).

7. Dispositif d'injection selon l'une quelconque des rendications 5 ou 6, **caractérisé en ce que** les orifices de la rangée (36b) ont un axe globalement parallèle à la partie intermédiaire conique convergente (32b) de la traversée coulissante.

8. Dispositif d'injection selon l'une quelconque des revendications 1 à 7 **caractérisé en ce que**, le bol (70) et la coupelle annulaire (50b) ayant chacun un rayon extérieur (71, respectivement 73), le rayon extérieur (71) du bol (70) est compris entre 1,1 et 1,2 fois la valeur du rayon extérieur (73) de la coupelle annulaire (50b).

9. Dispositif d'injection selon la revendication 8 **caractérisé en ce que** le bol (70) comporte une paroi conique divergente qui forme avec l'axe du symétrie (Y) du dispositif d'injection un angle compris entre 70 et 130 degrés.

10. Chambre de combustion comprenant une paroi interne, une paroi externe, un fond de chambre **caractérisée en ce qu'**elle est munie d'au moins un dispositif d'injection selon l'une quelconque des revendications précédentes.

11. Turbomachine munie d'une chambre de combustion selon la revendication 10.

## Patentansprüche

1. Vorrichtung zum Einspritzen eines Gemischs aus Luft und Treibstoff in eine Brennkammer einer Turbomaschine, wobei die Einspritzvorrichtung eine Rotationssymmetrie um eine Achse (Y) aufweist und, von stromauf nach stromab in Strömungsrichtung der Gase angeordnet, eine Schiebedurchführung (30b), in deren Mitte ein Injektor (40) positioniert ist, eine ringförmige Kappe (50b), die die Schiebedurchführung (30b) axial hält, wenigstens einen Radialverwirbler (60b), der ein Venturi-Rohr (62b) umfasst und mit seinem stromabwärtigen Ende mit einer Schale (70) verbunden ist, umfasst,
**dadurch gekennzeichnet, dass** die Schiebedurchführung (30b), von stromauf nach stromab angeordnet, einen stromaufwärtigen zylindrischen Teil (31b), der zu einem konvergenten konischen Zwischenteil (32b) fortgesetzt ist und als ein ringförmiger Flansch (33b), welcher sich radial nach außen erstreckt, ausläuft, umfasst, und dass die ringförmige Kappe (50b), von stromauf nach stromab angeordnet, eine stromaufwärtige, profilierte Verkleidung (51b), die eine divergente konische Form und eine konvexe Außenwand hat und zu einem ringförmigen Flansch (52b), welcher sich radial nach innen erstreckt, fortgesetzt ist, umfasst.

2. Einspritzvorrichtung nach Anspruch 1, **dadurch gekennzeichnet, dass** der stromaufwärtige zylindrische Teil (31b) der Schiebedurchführung (30b) eine abgeschrägte stromaufwärtige Seite (34b) umfasst, wobei die stromaufwärtige Seite radial nach innen geneigt ist.

3. Einspritzvorrichtung nach Anspruch 2, **dadurch gekennzeichnet, dass** die stromaufwärtige Seite (34b) der Schiebedurchführung unter einem Winkel von etwa 45° gegenüber der Symmetrieachse (Y) der Einspritzvorrichtung geneigt ist.

4. Einspritzvorrichtung nach einem der vorhergehenden Ansprüche, **dadurch gekennzeichnet, dass** der stromaufwärtige zylindrische Teil (31b) der Schiebedurchführung (30b) mit einem Axialverwirbler (35b) versehen ist.

5. Einspritzvorrichtung nach einem der vorhergehenden Ansprüche, **dadurch gekennzeichnet, dass** der ringförmige Flansch (33b) der Schiebedurchführung (30b) ein radial inneres Ende, das mit wenigstens einer Reihe von Öffnungen (36b) versehen ist, aufweist.

6. Einspritzvorrichtung nach Anspruch 5, **dadurch gekennzeichnet, dass** die Öffnungen der Reihe (36b) über den gesamten Umfang des ringförmigen Flansches (33b) gleichmäßig verteilt sind.

7. Einspritzvorrichtung nach einem der Ansprüche 5 oder 6, **dadurch gekennzeichnet, dass** die Öffnungen der Reihe (36b) eine zu dem konvergenten konischen Zwischenteil (32b) der Schiebedurchführung insgesamt parallele Achse aufweisen.

8. Einspritzvorrichtung nach einem der Ansprüche 1 bis 7, **dadurch gekennzeichnet, dass** die Schale (70) und die ringförmige Kappe (50b) jeweils einen Außenradius (71 bzw. 73) aufweisen und der Außenradius (71) der Schale (70) zwischen dem 1,1- und 1,2-fachen des Wertes des Außenradius (73) der ringförmigen Kappe (50b) beträgt.

9. Einspritzvorrichtung nach Anspruch 8, **dadurch gekennzeichnet, dass** die Schale (70) eine divergente konische Wand umfasst, die mit der Symmetrieachse (Y) der Einspritzvorrichtung einen Winkel zwischen 70 und 130 Grad bildet.

10. Brennkammer, umfassend eine Innenwand, eine Außenwand, einen Kammerboden, **dadurch gekennzeichnet, dass** sie mit wenigstens einer Einspritzvorrichtung nach einem der vorhergehenden Ansprüche ausgestattet ist.

11. Turbomaschine, die mit einer Brennkammer nach Anspruch 10 ausgestattet ist.

## Claims

1. A device for injecting a mixture of air and fuel into a combustion chamber of a turbomachine, the injection device having a symmetry of revolution about an axis (Y) and comprising, arranged from upstream to downstream in the gas flow direction, a sliding bushing (30b) at the center of which an injector (40) is positioned, an annular cup (50b) retaining the sliding bushing (30b) axially, at least one radial swirler (60b) comprising a venture (62b), and connected by its downstream end to a bowl (70);
wherein the sliding bushing (30b) comprises, arranged from upstream to downstream, a cylindrical upstream part (31b) extended by a convergent conical intermediate part (32b) and terminating in an annular flange 33b) extending radially outward and wherein the annular cup (50b) comprises, arranged from upstream to downstream, a profiled upstream fairing (51b) having a divergent conical shape and a convex external wall and extended by an annular flange (52b) extending radially inward.

2. The injection device as claimed in claim 1, wherein the cylindrical upstream part (31b) of the sliding bushing (30b) comprises a beveled upstream face (34b), the upstream face being inclined radially inward.

3. The injection device as claimed in claim 2, wherein the upstream face (34b) of the sliding bushing is inclined at an angle of about 45[deg.] to the axis (Y) of symmetry of the injection device.

4. The injection device as claimed in any one of the preceding claims, wherein the cylindrical upstream part (31b) of the sliding bushing (30b) is provided with an axial swirler (35b).

5. The injection device as claimed in any one of the preceding claims, wherein the annular flange (33b) of the sliding bushing (30b) has a radially internal end provided with at least one row of orifices (36b).

6. The injection device as claimed in claim 5, wherein the orifices of the row (36b) are distributed in a regular fashion around the entire circumference of the annular flange (33b).

7. The injection device as claimed in either of claims 5 and 6, wherein the orifices of the row (36b) have an axis generally parallel to the convergent conical intermediate part (32b) of the sliding bushing.

8. The injection device as claimed in any one of claims 1 to 7, wherein, when the bowl (70) and the annular cup (50b) each have an external radius (71, respectively 73), the external radius (71) of the bowl (70) is between 1.1 and 1.2 times the value of the external radius (73) of the annular cup (50b).

9. The injection device as claimed in claim 8, wherein the bowl (70) has a divergent conical wall that makes an angle of between 70 and 130[deg.] with the axis (Y) of symmetry of the injection device.

10. A combustion chamber comprising an internal wall, an external wall, and a chamber end wall, wherein the combustion chamber is provided with at least one injection device as claimed in any one of the preceding claims.

11. A turbomachine provided with a combustion chamber as claimed in claim 10.
